(19) Europäisches Patentamt
European Patent Office
Office européen des brevets

(11) **EP 3 418 906 A1**

(12) **EUROPEAN PATENT APPLICATION**
published in accordance with Art. 153(4) EPC

(43) Date of publication:
**26.12.2018 Bulletin 2018/52**

(51) Int Cl.:
**G06F 17/27** (2006.01)

(21) Application number: **17752653.0**

(22) Date of filing: **07.02.2017**

(86) International application number:
**PCT/CN2017/073020**

(87) International publication number:
**WO 2017/140221 (24.08.2017 Gazette 2017/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.02.2016 CN 201610091229**

(71) Applicant: **Tencent Technology (Shenzhen) Company Limited**
**Shenzhen, Guangdong 518057 (CN)**

(72) Inventors:
• **LIN, Quanchen**
**Shenzhen,**
**GUANGDONG 518057 (CN)**
• **LIU, Lichun**
**Shenzhen,**
**GUANGDONG 518057 (CN)**
• **ZHAO, Jianchun**
**Shenzhen,**
**GUANGDONG 518057 (CN)**

(74) Representative: **Eisenführ Speiser**
**Patentanwälte Rechtsanwälte PartGmbB**
**Postfach 31 02 60**
**80102 München (DE)**

(54) **TEXT INFORMATION PROCESSING METHOD AND DEVICE**

(57)　A text information processing method and device is provided. The method comprises: dividing a training corpus into words and strings (102); respectively calculating probabilities of the words and the strings in the training corpus to obtain an independent probability of the words and a joint probability of the strings (103); selecting, on the basis of the independent probability and the joint probability, a string from among the strings, and using the selected string as a candidate new word (104); and if the candidate new word is not in a predetermined dictionary and a joint probability corresponding to the candidate new word is greater than a predetermined threshold, determining the candidate new word to be a new word (105). The solution not only simplifies a process and reduces calculation resources, but also increases a discovery rate of new words to improve processing results.

Determine training corpus according to text information — 101

Divide the training corpus into words and strings — 102

Collect statistics about probabilities that each word and each string appear in the training corpus separately, to obtain an independent probability of each word and a joint probability of each string — 103

Perform selection in the strings according to the independent probability and the joint probability, and use a selected string as a candidate neologism — 104

Determine the candidate neologism as a neologism when the candidate neologism is not in a preset dictionary and a joint probability corresponding to the candidate neologism is greater than a preset threshold — 105

**FIG. 1b**

EP 3 418 906 A1

## Description

This application claims priority to Chinese Patent Application No. 201610091229.X, filed with the Chinese Patent Office on February 18, 2016 and titled "TEXT INFORMATION PROCESSING METHOD, APPARATUS AND SYSTEM", which is incorporated by reference in its entirety.

## FIELD OF THE TECHNOLOGY

This application relates to the field of communications technologies, and specifically, to a text information processing method and apparatus.

## BACKGROUND OF THE DISCLOSURE

With the continuous development of science and technology, text corpus generated by users is increased exponentially, and many neologisms such as "SARS" emerge from the ongoing new things. The emergency of the neologisms usually overwhelms some text processing models such as word segmentation. Word segmentation is the most basic link in Chinese natural language processing, and a non-ideal word segmentation result is bound to affect common text processing tasks such as text classification and clustering and topic identification. Therefore, automatic neologism discovery is very necessary.

Usually, neologism discovery methods may be classified into a statistics-based method and a rule-based method. The statistics-based method usually includes a hidden Markov model, maximum entropy, a support vector machine, and the like. The statistics information is usually used for generating a word segmentation model. The rule-based method is to learn some rules from a template feature library and a training set of labeled contextual collocation features, and then to apply the learned rules to to-be-discovered neologism corpus. For example, a word-building rule is a common rule.

In a research and practice process, the inventor of this application finds that word segmentation needs to be performed on text corpus in all of the foregoing solutions, and in the neologism discovery solutions based on word segmentation, training corpus and the to-be-discovered neologism corpus need to be combined continuously, to generate training corpus of the word segmentation model again. Neologisms are continuously discovered by means of snowballing, causing a complex process and consuming more computing resources. In addition, because a neologism does not have a definite definition, a boundary of the neologism is also difficult to determine, and a good effect usually cannot be achieved by defining the neologism by using a conventional dictionary and rule, causing a relatively low neologism discovery rate.

## SUMMARY

Embodiments of this application provides a text information processing method and apparatus, which not only can simplify a procedure and save computing resources but also can improve a neologism discovery rate and improve a processing effect.

An embodiment of this application provides a text information processing method, including:

determining training corpus according to text information;

dividing the training corpus into words and strings;

collecting statistics about probabilities that each word and each string appear in the training corpus separately, to obtain an independent probability of each word and a joint probability of each string;

performing selection in the strings according to the independent probability and the joint probability, and using a selected string as a candidate neologism; and

determining the candidate neologism as a neologism when the candidate neologism is not in a preset dictionary and a joint probability corresponding to the candidate neologism is greater than a preset threshold.

Correspondingly, an embodiment of this application further provides a text information processing apparatus, including:

an obtaining unit, configured to determine training corpus according to text information;

a division unit, configured to divide the training corpus into words and strings;

a statistics collection unit, configured to collect statistics about probabilities that each word and each string appear in the training corpus separately, to obtain an independent probability of each word and a joint probability of each string;

a selection unit, configured to: perform selection in the strings according to the independent probability and the joint probability, and use a selected string as a candidate neologism; and

a determining unit, configured to determine the candidate neologism as a neologism when the candidate neologism is not in a preset dictionary and a joint probability corresponding to the candidate neologism is greater than a preset threshold.

Moreover, an embodiment of this application further provides a text information processing apparatus, including one or more processors and a memory. The memory stores program instructions, the instructions, when being executed by the processor, causing the apparatus to perform the method according to the foregoing embodiment.

Moreover, an embodiment of this application further provides a computer readable storage medium including program instructions, the instructions, when being executed by a processor of a computing apparatus, causing the apparatus to perform the method according to the foregoing embodiment.

According to the embodiments of this application, the training corpus is divided into words and strings; statistics are collected about the probabilities that each word and each string appear in the training corpus separately, to obtain the independent probability of each word and the joint probability of each string; the candidate neologism is selected according to the independent probability and the joint probability; and the candidate neologism is determined as the neologism when it is determined that the candidate neologism is not in the preset dictionary and the joint probability corresponding to the candidate neologism is greater than the preset threshold. In this solution, a procedure can be greatly simplified and computing resources can be saved because there is no need to perform word segmentation or continuously update a word segmentation model. In addition, because there is no need to specify a word segmentation boundary, a case in which a neologism cannot be discovered caused by a blurred neologism boundary can be avoided, thereby greatly improving a neologism discovery rate and improving a processing effect.

**BRIEF DESCRIPTION OF THE DRAWINGS**

To describe the technical solutions of the embodiments of this application more clearly, the following briefly introduces the accompanying drawings required for describing the embodiments. Apparently, the accompanying drawings in the following description show only some embodiments of this application, and a person of ordinary skill in the art may still derive other drawings from these accompanying drawings without creative efforts.

FIG. 1a is a schematic scenario diagram of processing text information according to an embodiment of this application;

FIG. 1b is a flowchart of a text information processing method according to an embodiment of this application;

FIG. 2 is a flowchart of a text information processing method according to another embodiment of this application;

FIG. 3a is a schematic structural diagram of a text information processing apparatus according to an embodiment of this application;

FIG. 3b is a schematic structural diagram of a text information processing apparatus according to another embodiment of this application; and

FIG. 4 is a schematic structural diagram of a server according to an embodiment of the present invention.

**DESCRIPTION OF EMBODIMENTS**

The following clearly and completely describes the technical solutions in the embodiments of this application with reference to the accompanying drawings in the embodiments of this application. Apparently, the described embodiments are some embodiments of this application rather than all of the embodiments. All other embodiments obtained by a person skilled in the art based on the embodiments of this application without creative efforts shall fall within the protection scope of this application.

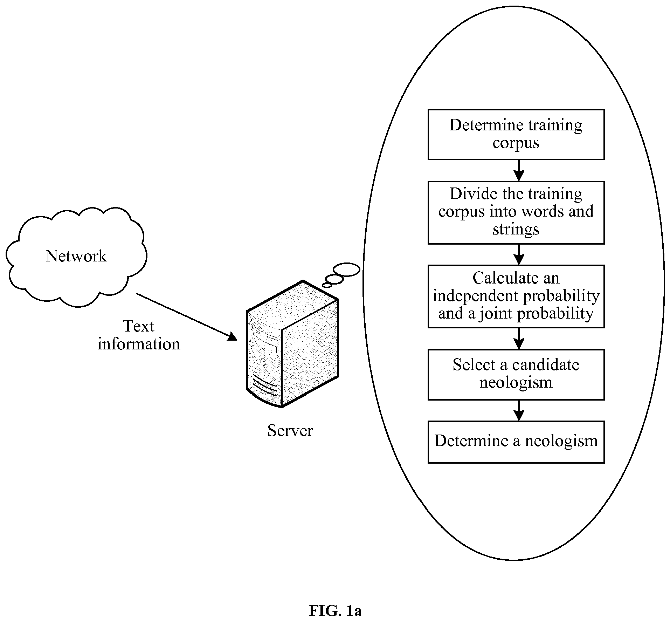

The embodiments of this application provide a text information processing method and apparatus. The text information processing method may be performed by various computing apparatuses such as a server. The text information processing apparatus may be integrated into various computing apparatuses such as a server. As shown in FIG. 1a, the server may obtain text information, for example, may obtain news, information about movies and television dramas, and user generated content (UGC) such as articles, micro blogs and/or blogs published by users from a network; determine training corpus according to the text information; divide the training corpus into words and strings; collect statistics about probabilities that each word and each string appear in the training corpus separately, to obtain an independent probability of each word and a joint probability of each string; select a candidate neologism according to the independent probability and the joint probability; and match the candidate neologism with a preset dictionary, and determine the candidate neologism as a neologism when the candidate neologism is not in the preset dictionary and a joint probability corresponding to the candidate neologism is greater than a preset threshold.

Detailed descriptions are provided below separately.

Embodiment 1

This embodiment is described in terms of a text information processing method. The text information processing method may be performed by an apparatus such as a server.

The text information processing method includes: determining training corpus according to text information; dividing the training corpus into words and strings; collecting statistics about probabilities that each word and each string appear in the training corpus separately, to obtain an independent probability of each word and a joint probability of each string; performing selection in the strings according to the independent probability and the joint probability, and using a selected string as a candidate neologism; and determining the candidate neologism as a neologism when the candidate neologism is not in a preset dictionary and a joint probability corresponding to the candidate neologism is greater than a preset threshold.

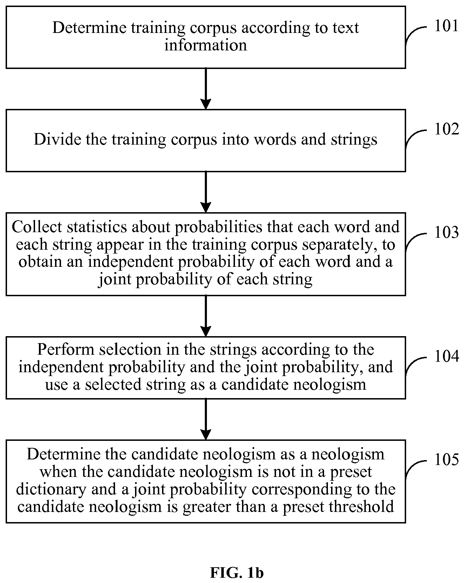

As shown in FIG. 1b, a specific procedure of the text information processing method may be as follows:

101: Determine training corpus according to text information.

Before the determining training corpus according to text information, the text information may be first obtained.

The text information may be various text information in a network, for example, news, information about movies and television dramas, and UGC. The UGC may include text information such as moods, comments, articles, micro blogs and/or blogs published by users.

After the text information is obtained, all of the obtained text information may be used as the training corpus, or a part of the text information may be selected as the training corpus. For example, the text information may be screened according to a preset policy, to remove some useless information, for example, emoticons; then, the screened text information is used as the training corpus.

102: Divide the training corpus into words and strings.

The string includes two or more continuous words, and may usually include, for example, two, three, or four continuous words. The specific number may be set according to an actual application scenario.

It should be noted that the word mentioned in this embodiment of this application may include a Chinese character, Japanese, or the like. For ease of description, this embodiment of this application is described by using the Chinese character as an example.

103: Collect statistics about probabilities that each word and each string appear in the training corpus separately, to obtain an independent probability of each word and a joint probability of each string. For example, specific descriptions may be as follows:

(1) Collect statistics about the number of times that each word appears in the training corpus, the number of times that each string appears in the training corpus, and the total number of words in the training corpus separately.

(2) Calculate a probability of each word according to the number of times that each word appears in the training corpus and the total number of words in the training corpus, to obtain an independent probability of each word.

For example, the number of times that the word appears in the training corpus may be divided by the total number of words in the training corpus, to obtain the independent probability of the word, which is expressed by using a formula as:

$$p(W_k) = \frac{count(W_k)}{\sum_{i=0}^{N} count(W_i)}$$

$p(W_k)$ being an independent probability of a word, $count(W_k)$ being the number of times that the word appears in the training corpus, and $\sum_{i=0}^{N} count(W_i)$ being the total number of words in the training corpus.

(3) Calculate a probability of each string according to the number of times that each string appears in the training corpus and the total number of words in the training corpus, to obtain a joint probability of each string.

For example, the number of times that the string appears in the training corpus may be divided by the total number of words in the training corpus, to obtain the joint probability of the string. This is expressed by using a formula as:

$$p(W_j...W_{j+k}) = \frac{count(W_j...W_{j+k})}{\sum_{i=0}^{N} count(W_i)}$$

$p(W_j...W_{j+k})$ being a joint probability of a string, $count(W_j...W_{j+k})$ being the number of times that the string appears in the training corpus, and $\sum_{i=0}^{N} count(W_i)$ being the total number of words in the training corpus.

104: Perform selection in the strings according to the independent probability and the joint probability, and use a selected string as a candidate neologism.

In this step, for each string obtained through division in step 102, it may be determined whether the joint probability of the string is greater than a product of independent probabilities of all words in the string, and the string is determined as a candidate neologism if the joint probability of the string is greater than the product of the independent probabilities of all the words in the string. The obtained candidate neologism may form a candidate neologism set.

For example, a joint probability of a string may be compared with a product of independent probabilities of all words in the string; and if the joint probability is greater than the product, the string may be determined as a candidate neologism. That is, specific descriptions may be as follows:

determining a string that needs to be processed currently, to obtain a current string; obtaining a joint probability of the current string and independent probabilities of all words in the current string; and determining the current string as a candidate neologism when the joint probability of the current string is greater than a product of the independent probabilities of all the words in the current string. This is expressed by using a formula as:

determining the current string as a candidate neologism when $p(W_j)p(W_{j+1})...p(W_{j+k}) < p(W_j...W_{j+k})$. The determined candidate neologism may be added to a candidate neologism set.

If a string (candidate neologism) continuously appears in the corpus, the string is more bound to be a neologism. Therefore, optionally, to improve the neologism discovery accuracy, the size of the training corpus may be converted into the time length according to a reading speed of a user. Then, learning is continuously performed according to a particular rule (for example, an Ebbinghaus' memory law), and a joint probability is updated. That is, after the step of "performing selection in the strings according to the independent probability and the joint probability, and using a selected string as a candidate neologism", the text information processing method may further include: updating the joint probability corresponding to the candidate neologism according to a particular rule.

For example, the joint probability corresponding to the candidate neologism may be updated according to the Ebbinghaus' memory law by using the following method:

(1) Determine a candidate neologism that needs to be processed currently in the candidate neologism set.

(2) Estimate a time required for reading from a training start position in the training corpus to a position of the candidate neologism that needs to be processed currently, to obtain a forward time.

For example, the training start position in the training corpus and the position (for example, an ordinal position) of the candidate neologism that needs to be processed currently in the training corpus may be determined; then, a distance between the training start position and the ordinal position is calculated to obtain a first distance; and the first distance is divided by a preset reading speed, to obtain a forward time. This is expressed by using a formula as:

$$T_{pre} = \frac{POS_i}{\delta}$$

$T_{pre}$ indicating a forward time, $POS_i$ indicating a position of the $i^{th}$ candidate neologism in the corpus, and $\delta$ indicating a reading speed, being a constant, and being set according to an actual application requirement. For example, $\delta$ may be set to 8, that is, 8 words per second.

(3) Estimate a time required for reading from the position of the candidate neologism that needs to be processed currently to a training end position in the training corpus, to obtain a backward time.

For example, the training end position in the training corpus and the position (for example, a reverse position) of the candidate neologism that needs to be processed currently in the training corpus may be determined; then, a distance between the reverse position and the training end position is calculated to obtain a second distance; and the second distance is divided by the preset reading speed, to obtain a backward time. This is expressed by using a formula as:

$$T_{bck} = \frac{(Len - POS_i)}{\delta}$$

$T_{bck}$ indicating a backward time, $POS_i$ indicating a position of the $i^{th}$ candidate neologism in the corpus, $Len$ indicating the total length of the training corpus, and $\delta$ indicating a reading speed, being a constant, and being set according to an actual application requirement. For example, $\delta$ may be set to 8, that is, 8 words per second.

(4) Update, in real time by using a preset exponential decay function according to the forward time and the backward time, a joint probability of the candidate neologism that needs to be processed currently, to obtain an updated joint probability.

The exponential decay function may be constructed according to the Ebbinghaus' memory law. For example, a formula may be as follows:

$$f(Seq_i) = (1 + f(Seq_i))(\ell^{-\alpha T_{pre}} + \ell^{-\alpha T_{bck}})$$

$f(Seq_i)$ indicating a probability that the candidate neologism is a neologism, $\alpha$ being an attenuation constant, indicating an attenuation amplitude, and being adjusted according to an actual application requirement, $T_{pre}$ being a forward time, and $T_{bck}$ being a backward time.

It should be noted that when a word-making probability of a candidate neologism is calculated, corresponding training start positions may be evenly generated in the training corpus according to a sequence and according to the number of iterations, to ensure a different start position calculated for each iteration and ensure, to the greatest extent, that generation of $T_{pre}$ and $T_{bck}$ is not affected by the start positions. That is, before the step of "updating the joint probability corresponding to the candidate neologism according to the Ebbinghaus' memory law", the text information processing method may further include:

obtaining the number of required iterations; generating corresponding training start positions evenly in the training corpus according to a sequence and according to the number of iterations, to ensure a different training start position for each iteration; and determining corresponding training end positions according to the training start positions.

In this case, the step of "determining the training start position in the training corpus" may be specifically: determining a corresponding training start position according to a current iteration order.

The step of "determining the training end position in the training corpus" may be specifically: determining a corresponding training end position according to the current iteration order.

The number of required iterations may be set according to an actual application requirement, for example, may be set to 100.

Moreover, it should be further noted that in addition to the Ebbinghaus' memory law, the exponential decay function may be further constructed by using another function that "can simulate an exponential decay rule", for example, Newton's law of cooling.

(5) Return to the step of determining a candidate neologism that needs to be processed currently in the candidate neologism set, that is, return to step (1), until joint probabilities of all candidate neologisms in the candidate neologism set are updated.

105: Determine the candidate neologism as a neologism when the candidate neologism is not in a preset dictionary and a joint probability corresponding to the candidate neologism is greater than a preset threshold.

The joint probability corresponding to the candidate neologism may be a joint probability of the string selected in step 104. If the joint probability has been updated, an updated joint probability needs to be used for comparison. That is, the step of "determining the candidate neologism as a neologism when the candidate neologism is not in a preset dictionary and a joint probability corresponding to the candidate neologism is greater than a preset threshold" may be specifically:

determining the candidate neologism as a neologism when the candidate neologism is not in the preset dictionary and an updated joint probability is greater than the preset threshold.

The preset threshold and the preset dictionary may be set according to an actual application requirement.

It can be learned from the foregoing that in this embodiment, the training corpus is divided into words and strings; statistics are collected about the probabilities that each word and each string appear in the training corpus separately, to obtain the independent probability of each word and the joint probability of each string; the candidate neologism is selected according to the independent probability and the joint probability; and the candidate neologism is determined as the neologism when the candidate neologism is not in the preset dictionary and the joint probability corresponding to the candidate neologism is greater than the preset threshold. In this solution, a procedure can be greatly simplified and computing resources can be saved because there is no need to perform word segmentation or continuously update a word segmentation model. In addition, because there is no need to specify a word segmentation boundary, a case in which a neologism cannot be discovered caused by a blurred neologism boundary can be avoided, thereby greatly improving a neologism discovery rate and improving a processing effect.

Embodiment 2

According to the method described in Embodiment 1, the following further provides detailed descriptions by using an example.

In this embodiment, the descriptions are provided by using an example of a Chinese character and in which a text information processing apparatus is specifically integrated into a server.

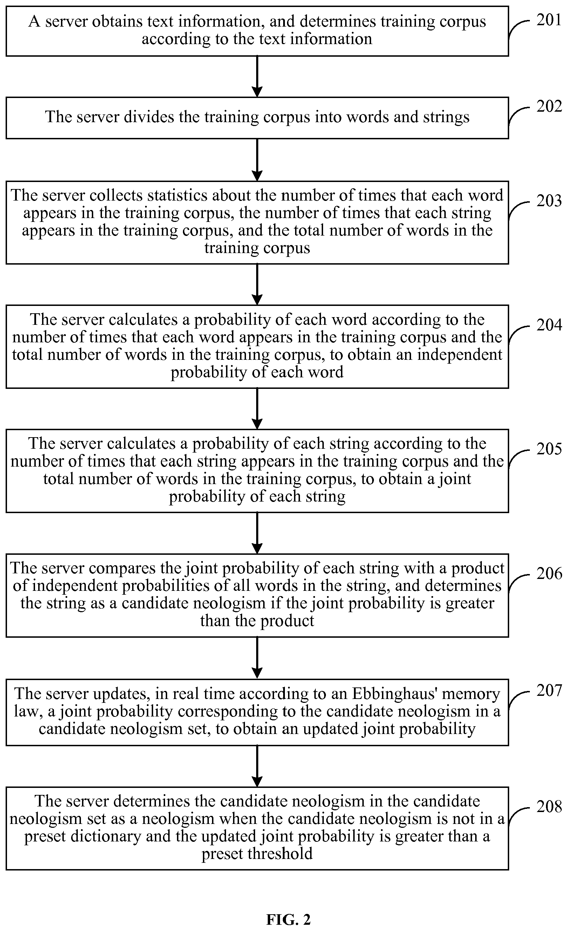

As shown in FIG. 2, a specific procedure of a text information processing method may be as follows:

201: The server obtains text information, and determines training corpus according to the text information.

The text information may be various text information in a network, for example, news, information about movies and television dramas, and UGC. The UGC may include text information such as moods, comments, articles, micro blogs and/or blogs published by users.

After the text information is obtained, all of the obtained text information may be used as the training corpus, or a part of the text information may be selected as the training corpus. For example, the text information may be screened according to a preset policy, to remove some useless information, for example, emoticons; then, the screened text information is used as the training corpus.

202: The server divides the training corpus into words and strings.

The string includes two or more continuous words, and may usually include, for example, two, three, or four continuous words. The specific number may be set according to an actual application scenario.

203: The server collects statistics about the number of times that each word appears in the training corpus, the number of times that each string appears in the training corpus, and the total number of words in the training corpus.

204: The server calculates a probability of each word according to the number of times that each word appears in the training corpus and the total number of words in the training corpus, to obtain an independent probability of each word.

For example, the number of times that the word appears in the training corpus may be divided by the total number of words in the training corpus, to obtain the independent probability of the word. This is expressed by using a formula as:

$$p(W_k) = \frac{count(W_k)}{\sum_{i=0}^{N} count(W_i)}$$

$p(W_k)$ being an independent probability of a word, $count(W_k)$ being the number of times that the word appears in the training corpus, and $\sum_{i=0}^{N} count(W_i)$ being the total number of words in the training corpus.

For example, if the number of times that a word "美" appears in the training corpus is 100, and the total number of words in the training corpus is 100000, an independent probability of the word "美" is 1/1000; similarly, if the number of times that a word "好" appears in the training corpus is 1000, and the total number of words in the training corpus is 100000, an independent probability of the word "好" is 1/100; and by analog.

205: The server calculates a probability of each string according to the number of times that each string appears in the training corpus and the total number of words in the training corpus, to obtain a joint probability of each string.

For example, the number of times that the string appears in the training corpus may be divided by the total number of words in the training corpus, to obtain the joint probability of the string. This is expressed by using a formula as:

$$p(W_j...W_{j+k}) = \frac{count(W_j...W_{j+k})}{\sum_{i=0}^{N} count(W_i)}$$

$p(W_j...W_{j+k})$ being a joint probability of a string,

$count(W_j...W_{j+k})$ being the number of times that the string appears in the training corpus, and $\sum_{i=0}^{N} count(W_i)$ being the total number of words in the training corpus.

For example, if the number of times that a string "美好" appears in the training corpus is 50, and the total number of words in the training corpus is 100000, a joint probability of the string "美好" is 1/2000; similarly, if the number of times that a string "美丽" appears in the training corpus is 10, and the total number of words in the training corpus is 100000, a joint probability of the string "美丽" is 1/10000; and by analog.

It should be noted that step 204 and step 205 may not be implemented in a particular order.

206: The server compares the joint probability of each string with a product of independent probabilities of all words in the string, and determines the string as a candidate neologism if the joint probability is greater than the product. That is, when $p(W_j)p(W_{j+1})...p(W_{j+k})$ < $p(W_j...W_{j+k})$, the current string is determined as a candidate neologism. Then, the candidate neologism may be added to a candidate neologism set. For example, specific descriptions may be as follows:

determining a string that needs to be processed currently, to obtain a current string; obtaining a joint probability of the current string and independent probabilities of all words in the current string; determining the current string as a candidate neologism when the joint probability of the current string is greater than a product of the independent probabilities of all the words in the current string; and adding the candidate neologism to a candidate neologism set.

For example, if a joint probability of a string "美好" is 1/2000, an independent probability of a word "美" is 1/1000, and an independent probability of a word "好" is 1/100, the joint probability of the string "美好" is greater than a product of the independent probabilities of the words "美" and "好". Therefore, the string "美好" may be determined as a candidate neologism, and by analog.

207: The server updates, in real time according to an Ebbinghaus' memory law, a joint probability corresponding to the candidate neologism in the candidate neologism set, to obtain an updated joint probability. For example, descriptions may be as follows:

(1) Determine a candidate neologism that needs to be processed currently in the candidate neologism set.

The candidate neologism set may include a plurality of candidate neologisms, and joint probabilities of the candidate neologisms may be updated one by one.

(2) Estimate a time required for reading from a training start position in the training corpus to a position of the candidate neologism that needs to be processed currently, to obtain a forward time.

For example, the training start position in the training corpus and an ordinal position of the candidate neologism that needs to be processed currently in the training corpus may be determined; then, a distance between the training start position and the ordinal position is calculated to obtain a first distance; and the first distance is divided by a preset reading speed, to obtain a forward time. This is expressed by using a formula as:

$$T_{pre} = \frac{POS_i}{\delta}$$

$T_{pre}$ indicating a forward time, $POS_i$ indicating a position of the ith candidate neologism in the corpus, $\delta$ indicating a reading speed, being a constant, and being set according to an actual application requirement. For example, $\delta$ may be set to 8, that is, 8 words per second.
For example, if there are 80000 words in a distance between an ordinal position of a candidate neologism "美好" in the training corpus and the training start position, and a reading speed $\delta$ 8 words per second, a forward time of the candidate neologism "美好" may be calculated as 80000/8=10000 seconds.

(3) Estimate a time required for reading from the position of the candidate neologism that needs to be processed currently to a training end position in the training corpus, to obtain a backward time.

For example, the training end position in the training corpus and a reverse position of the candidate neologism that needs to be processed currently in the training corpus may be determined; then, a distance between the reverse position and the training end position is calculated to obtain a second distance; and the second distance is divided by the preset reading speed, to obtain a backward time. This is expressed by using a formula as:

$$T_{bck} = \frac{(Len - POS_i)}{\delta}$$

$T_{bck}$ indicating a backward time, $POS_i$ indicating a position of the ith candidate neologism in the corpus, $Len$ indicating the total length of the training corpus, and $\delta$ indicating a reading speed, being a constant, and being set according to an actual application requirement. For example, $\delta$ may be set to 8, that is, 8 words per second.
For example, if there are 20000 words in a distance between a reverse position of a candidate neolo-

gism "美好" in the training corpus and the training end position (that is, the total length 100000 of the training corpus minus the forward position 80000 of the string "美好"), and a reading speed $\delta$ 8 words per second, a backward time of the candidate neologism "美好" may be calculated as 20000/8=2500 seconds.

(4) Update, in real time by using a preset exponential decay function according to the forward time and the backward time, a joint probability corresponding to the candidate neologism that needs to be processed currently, to obtain an updated joint probability.

The exponential decay function may be constructed according to the Ebbinghaus' memory law. For example, a formula may be as follows:

$$f(Seq_i) = (1 + f(Seq_i))(\ell^{-\alpha T_{pre}} + \ell^{-\alpha T_{bck}})$$

$f(Seq_i)$ indicating a probability that the candidate neologism is a neologism, $\alpha$ being an attenuation constant, indicating an attenuation amplitude, and being adjusted according to an actual application requirement, $T_{pre}$ being a forward time, and $T_{bck}$ being a backward time.
It should be noted that when a word-making probability of a candidate neologism is calculated, corresponding training start positions may be evenly generated in the training corpus according to a sequence and according to the number of iterations, to ensure a different start position calculated for each iteration and ensure, to the greatest extent, that generation of $T_{pre}$ and $T_{bck}$ is not affected by the start positions. That is, before the step of "updating in real time the joint probability corresponding to the candidate neologism in the candidate neologism set according to the Ebbinghaus' memory law, to obtain an updated joint probability", the text information processing method may further include:
obtaining the number of required iterations; generating corresponding training start positions evenly in the training corpus according to a sequence and according to the number of iterations, to ensure a different training start position for each iteration; and determining corresponding training end positions according to the training start positions.
In this case, the step of "determining the training start position in the training corpus" may be specifically: determining a corresponding training start position according to a current iteration order.
The step of "determining the training end position in the training corpus" may be specifically: determining a corresponding training end position according to the current iteration order.
The number of required iterations may be set according to an actual application requirement, for example, may be set to 100.

For example, it is assumed that there are 100000 pieces of corpus in to-be-trained corpus, and the number of iterations is set to 100. In this case, a start position for the first round of iteration is the 1st text and an end position is the 100000th text, a start position for the second round of iteration is the 1001st text and a corresponding end position is the 999th text, a start position for the $k^{th}$ ($k<100$) round of iteration is the $(1000*(k-1)+1)^{th}$ text and an end position is the $(1000*(k-1)-1)^{th}$ text.

> (5) Return to the step of determining a candidate neologism that needs to be processed currently in the candidate neologism set, that is, return to step (1), until joint probabilities of all candidate neologisms in the candidate neologism set are updated.

208: The server determines the candidate neologism in the candidate neologism set as a neologism when the candidate neologism is not in a preset dictionary and the updated joint probability is greater than a preset threshold.

For example, the candidate neologism in the candidate neologism set may be matched with words in the preset dictionary. If the candidate neologism is not in the dictionary, and a current joint probability (that is, the updated joint probability) of the candidate neologism is greater than the preset threshold, it is determined that the candidate neologism is a neologism. Otherwise, if the candidate neologism is in the dictionary, or if a current joint probability (that is, the updated joint probability) of the candidate neologism is less than or equal to the preset threshold although the candidate neologism is not in the dictionary, it is determined that the candidate neologism is not a neologism.

The preset threshold and the preset dictionary may be set according to an actual application requirement.

For example, if a candidate neologism "美好" has been in the dictionary, the candidate neologism "美好" is not used as a neologism, and if a candidate neologism "猴赛雷" is not in the dictionary, and a joint probability of "猴赛雷" is greater than the preset threshold, it may be determined that "猴赛雷" is a neologism.

It can be learned from the foregoing that in this embodiment, the training corpus is divided into words and strings; statistics are collected about the probabilities that each word and each string appear in the training corpus separately, to obtain the independent probability of each word and the joint probability of each string; the candidate neologism is selected according to the independent probability and the joint probability, to obtain the candidate neologism set; and the candidate neologism in the candidate neologism set is determined as the neologism when it is determined that the candidate neologism is not in the preset dictionary and the corresponding joint probability is greater than the preset threshold. In this solution, a procedure can be greatly simplified and computing resources can be saved because there is no need to perform word segmentation or continuously update a word segmentation model. In addition, because there is no need to specify a word segmentation boundary, a case in which a neologism cannot be discovered caused by a blurred neologism boundary can be avoided, thereby greatly improving a neologism discovery rate and improving a processing effect.

This solution may be used for generation of a large-scale corpus thesaurus, word weight value calculation (key word or topic word extraction), and generation of an extended dictionary, and may be further used for word detection such as detecting a malicious comment, and the like.

Embodiment 3

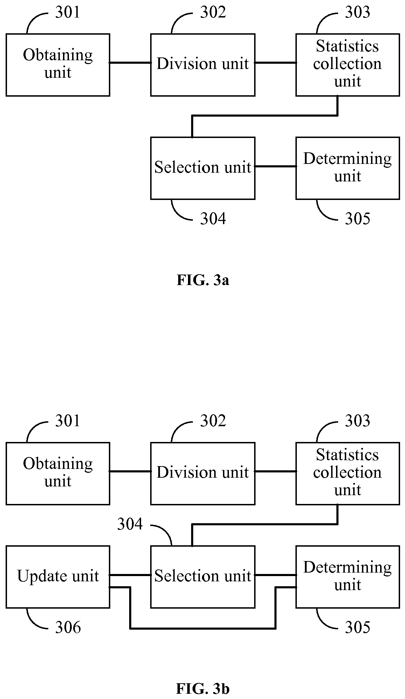

To better implement the foregoing method, this embodiment of this application further provides a text information processing apparatus. As shown in FIG. 3a, the text information processing apparatus may include an obtaining unit 301, a division unit 302, a statistics collection unit 303, a selection unit 304, and a determining unit 305. Descriptions are as follows:

(1) Obtaining unit 301

The obtaining unit 301 is configured to determine training corpus according to text information.

The text information may be various text information in a network, for example, news, information about movies and television dramas, and UGC. The UGC may include text information such as moods, comments, articles, micro blogs and/or blogs published by users.

After the text information is obtained, all of the obtained text information may be used as the training corpus, or a part of the text information may be selected as the training corpus. For example, the text information may be screened according to a preset policy, to remove some useless information, for example, emoticons; then, the screened text information is used as the training corpus.

(2) Division unit 302

The division unit 302 is configured to divide the training corpus into words and strings.

The string includes two or more continuous words, and may usually include, for example, two, three, or four continuous words. The specific number may be set according to an actual application scenario.

(3) Statistics collection unit 303

The statistics collection unit 303 is configured to collect statistics about probabilities that each word and each string appear in the training corpus separately, to obtain an independent probability of each word and a joint probability of each string. For example, the statistics collection unit 303 may be specifically configured to:

collect statistics about the number of times that each word appears in the training corpus, the number of times that each string appears in the training corpus, and the total number of words in the training corpus separately;

calculating a probability of each word according to the number of times that each word appears in the training corpus and the total number of words, to obtain an independent probability of each word; and

calculating a probability of each string according to the number of times that each word appears in the training corpus and the total number of words, to obtain a joint probability of each string.

For details, refer to the foregoing method embodiments. Details are not described herein again.

(4) Selection unit 304

The selection unit 304 is configured to: perform selection in the strings according to the independent probability and the joint probability, and use a selected string as a candidate neologism.

For example, a joint probability of a string may be compared with a product of independent probabilities of all words in the string; and if the joint probability is greater than the product, the string may be determined as a candidate neologism. That is:

The selection unit 304 may be specifically configured to: determine, for each string obtained through division, whether a joint probability of the string is greater than a product of independent probabilities of all words in the string; and determine the string as a candidate neologism if the joint probability of the string is greater than the product of the independent probabilities of all the words in the string.

(5) Determining unit 305

The determining unit 305 is configured to determine the candidate neologism as a neologism when the candidate neologism is not in a preset dictionary and a joint probability corresponding to the candidate neologism is greater than a preset threshold.

The preset threshold and the dictionary may be set according to an actual application requirement.

Because a string (a candidate neologism) continuously appears in the corpus, the string is more bound to be a neologism. Therefore, to improve the neologism discovery accuracy, the size of the training corpus may be converted into the time length according to a reading speed of a user. Then, learning is continuously performed according to an Ebbinghaus' memory law, and a joint probability is updated. That is, optionally, as shown in FIG. 3b, the text information processing apparatus may further include an update unit 306. Descriptions are as follows:

The update unit 306 may be configured to update the joint probability corresponding to the candidate neologism according to a particular rule.

In this case, the determining unit 305 may be configured to determine the candidate neologism as a neologism when the candidate neologism is not in the preset dictionary and an updated joint probability is greater than the preset threshold.

For example, the update unit 306 may be specifically configured to: estimate a time required for reading from a training start position in the training corpus to a position of the candidate neologism, to obtain a forward time; estimate a time required for reading from the position of the candidate neologism to a training end position in the training corpus, to obtain a backward time; and update the joint probability corresponding to the candidate neologism by using a preset exponential decay function according to the forward time and the backward time, to obtain an updated joint probability. The particular rule may be an Ebbinghaus' memory law, and the exponential decay function may be constructed according to the Ebbinghaus' memory law.

In addition, the update unit 306 may be specifically configured to determine the training start position in the training corpus and a position (for example, an ordinal position) of a candidate neologism that needs to be processed currently in the training corpus. The update unit 306 may be further specifically configured to: calculate a distance between the training start position and the position of the candidate neologism, to obtain a first distance; and divide the first distance by a preset reading speed, to obtain the forward time.

The update unit 306 may be specifically configured to determine the training end position in the training corpus and a position (for example, a reverse position) of a candidate neologism that needs to be processed currently in the training corpus. The update unit 306 may be further specifically configured to: calculate a distance between the position of the candidate neologism and the training end position, to obtain a second distance; and divide the second distance by the preset reading speed, to obtain the backward time.

During specific implementation, the foregoing units may be implemented as independent entities, or may be combined arbitrarily, or may be implemented as a same entity or several entities. For specific implementation of the foregoing units, refer to the foregoing method embodiments. Details are not described herein again.

The text information processing apparatus may be specifically integrated into a network device such as a server.

It can be learned from the foregoing that the division unit 302 of the text information processing apparatus in this embodiment may divide the training corpus into words and strings; the statistics collection unit 303 may collect statistics about the probabilities that each word and each string appear in the training corpus separately, to obtain the independent probability of each word and the joint probability of each string; the selection unit 304 selects the candidate neologism according to the independent probability and the joint probability; and the determining unit 305 determines the candidate neologism as the neologism when the candidate neologism is not in the preset dictionary and a joint probability corresponding to the candidate neologism is greater than the preset threshold. In this solution, a procedure can be greatly simplified and computing resources can be saved because there is no need to perform word segmentation or continuously update a word segmentation model. In addition, because there is no need to specify a word segmentation boundary, a case in which a neologism cannot be discovered caused by a blurred neologism boundary can be avoided, thereby greatly improving a neologism discovery rate and improving a processing effect.

Embodiment 4

Correspondingly, this embodiment of this application further provides a text information processing system, including any text information processing apparatus according to the embodiments of this application. For details, refer to Embodiment 3. For example, descriptions may be as follows:

The text information processing apparatus is configured to: determine training corpus according to text information; divide the training corpus into words and strings; collect statistics about probabilities that each word and each string appear in the training corpus separately, to obtain an independent probability of each word and a joint probability of each string; perform selection in the strings according to the independent probability and the joint probability, and use a selected string as a candidate neologism; and determine the candidate neologism as a neologism when the candidate neologism is not in a preset dictionary and a joint probability corresponding to the candidate neologism is greater than a preset threshold.

The text information may be various text information in a network, for example, news, information about movies and television dramas, and UGC. The UGC may include text information such as moods, comments, articles, micro blogs and/or blogs published by users.

The text information processing system may further include other devices such as a storage server configured to store data and a terminal device configured to publish text information. Details are not described herein again.

For specific implementation of the foregoing devices, refer to the foregoing method embodiments. Details are not described herein again.

The text information processing system may include any text information processing apparatus provided in the embodiments of the present invention, and therefore, can achieve the beneficial effects that can be achieved by any text information processing apparatus provided in the embodiments of the present invention. For details, refer to the foregoing embodiments. Details are not described herein again.

Embodiment 5

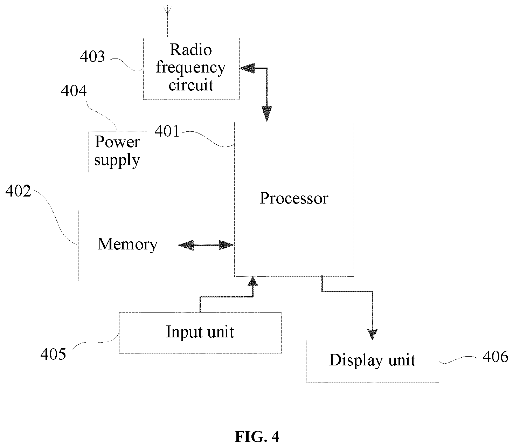

This embodiment of this application further provides a computing apparatus. As shown in FIG. 4, the computing apparatus in this embodiment of this application is shown by using a server as an example. Specifically:

The server may include components such as a processor 401 including one or more processing cores, a memory 402 including one or more computer readable storage media, a radio frequency (RF) circuit 403, a power supply 404, an input unit 405, and a display unit 406. A person skilled in the art may understand that the server structure shown in FIG. 4 does not constitute a limit to the server. The server may include more or fewer parts than those shown in the figure, may combine some parts, or may have different part arrangements.

The processor 401 is a control center of the server, and is connected to various parts of the entire server by using various interfaces and lines. By running or executing a software program and/or module stored in the memory 402, and invoking data stored in the memory 402, the processor 401 executes various functions of the server and performs data processing, thereby monitoring the entire server. Optionally, the processor 401 may include one or more processor cores. Preferably, the processor 401 may integrate an application processor and a modem. The application processor mainly processes an operating system, a user interface, an application program, and the like. The modem mainly processes wireless communication. It may be understood that the foregoing modem may also not be integrated into the processor 401.

The memory 402 may be configured to store a software program and module. The processor 401 runs the software program and module stored in the memory 402, to implement various functional applications and data processing. The memory 402 may mainly include a program storage area and a data storage area. The program storage area may store an operating system, an application program required by at least one function (such as a sound playing function and an image display function), and the like. The data storage area may store data created according to use of the server, and the like. In addition, the memory 402 may include a high-speed random access memory, and may also include a nonvolatile memory, such as at least one magnetic disk storage device, a flash memory, or another volatile solid-state storage device. Correspondingly, the memory 402 may further include a memory controller, to provide access of the processor 401 to the memory 402.

The RF circuit 403 may be configured to receive and send a signal during information transmission and receiving. Especially, the RF circuit 403 sends, after receiving downlink information of a base station, the information to one or more processors 401 for processing, and sends involved uplink data to the base station. Generally, the RF circuit 403 includes but is not limited to an antenna, at least one amplifier, a tuner, one or more oscillators, a subscriber identity module (SIM) card, a transceiver, a coupler, a low noise amplifier (LNA), a duplexer, and the like. In addition, the RF circuit 403 may also communicate with a network and another device by wireless communication. The wireless communication may use any communications standard or protocol, which includes but is not limited to, Global System of Mobile communication (GSM), General Packet Radio Service (GPRS), Code Division Multiple Access (CDMA), Wideband Code Division Multiple Access (WCDMA), Long Term Evolution (LTE), e-mail, Short Messaging Service (SMS), and the like.

The server further includes the power supply 404 (for example, a battery) that supplies power to each component. Preferably, the power supply 404 may be logically connected to the processor 401 by using a power supply management system, so that functions such as management of charging, discharging, and power consumption are implemented by using the power supply management system. The power supply 404 may further include one or more of a direct current or alternating current power supply, a re-charging system, a power failure detection circuit, a power supply converter or inverter, a power supply state indicator, and any other components.

The server may further include the input unit 405. The input unit 405 may be configured to receive entered numeric or character information and generate keyboard, mouse, joystick, optical, or trackball signal input related to user settings and function control. Specifically, in a specific embodiment, the input unit 405 may include a touch-sensitive surface and another input device. The touch-sensitive surface, which may also be referred to as a touch screen or a touch panel, may collect a touch operation of a user on or near the touch-sensitive surface (such as an operation of a user on or near the touch-sensitive surface by using any suitable object or accessory such as a finger or a stylus), and drive a corresponding connection apparatus according to a preset program. Optionally, the touch-sensitive surface may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and sends the touch point coordinates to the processor 401. Moreover, the touch controller can receive and execute a command sent from the processor 401. In addition, the touch-sensitive surface may be implemented in multiple types, such as a resistive type, a capacitive type, an infrared type, and a surface acoustic wave type. In addition to the touch-sensitive surface, the input unit 405 may further include another input device. Specifically, the another input device may include but is not limited to one or more of a physical keyboard, a function key (for example, a volume control key or a power on/off key), a trackball, a mouse, or a joystick.

The server may further include the display unit 406. The display unit 406 may be configured to display information entered by the user or information provided to the user, and graphical user interfaces of the server. The graphical user interfaces each may include an image, text, an icon, a video, or any combination thereof. The display unit 406 may include a display panel. Optionally, the display panel may be configured in a form of a liquid crystal display (LCD), an organic light-emitting diode (OLED), or the like. Further, the touch-sensitive surface may cover the display panel. After detecting a touch operation on or near the touch-sensitive surface, the touch-sensitive surface transfer the touch operation to the processor 401 to determine a type of a touch event, and then the processor 401 provides corresponding visual output on the display panel according to the type of the touch event. Although in FIG. 4, the touch-sensitive surface and the display panel are used as two separate parts to implement input and output functions, in some embodiments, the touch-sensitive surface and the display panel may be integrated to implement the input and output functions.

Although not shown, the server may further include a camera, a Bluetooth module, and the like. Details are not further provided herein. Specifically, in this embodiment, the processor 401 of the server may load, according to the following instructions, executable files corresponding to processes of one or more application programs into the memory 402. The processor 401 runs the application programs stored in the memory 402, to implement various functions:

determining training corpus according to text information; dividing the training corpus into words and strings; collecting statistics about probabilities that each word and each string appear in the training corpus separately, to obtain an independent probability of each word and a joint probability of each string; selecting a candidate neologism according to the independent probability and the joint probability; and determining the candidate neologism as a neologism when the candidate neologism is not in a preset dictionary and a joint probability corresponding to the candidate neologism is greater than a preset threshold.

For specific implementation of the above operations and corresponding beneficial effects, refer to the foregoing embodiments. Details are not described herein again.

A person of ordinary skill in the art may understand that all or some of the steps of the methods in the foregoing embodiments may be implemented by a program instructing relevant hardware. The program may be stored in a computer readable storage medium. The storage medium may include a read-only memory (ROM), a random access memory (RAM), a magnetic disk, an optical disc, or the like.

The text information processing method, apparatus, and system provided in the embodiments of this application are described above in detail. This specification explains the principles and implementations of this application by using specific examples. The descriptions of the foregoing embodiments are merely intended to help understand the method of this application and the core idea of this application. In addition, a person skilled in the art may make some variations in specific implementations and application scopes according to the idea of this application. Therefore, this specification shall not be construed as a limitation to this application.

**Claims**

1. A text information processing method, comprising:

    determining training corpus according to text information;
    dividing the training corpus into words and strings;
    collecting statistics about probabilities that each word and each string appear in the training corpus separately, to obtain an independent probability of each word and a joint probability of each string;
    performing selection in the strings according to the independent probability and the joint probability, and using a selected string as a candidate neologism; and
    determining the candidate neologism as a neologism when the candidate neologism is not in a preset dictionary and a joint probability corresponding to the candidate neologism is greater than a preset threshold.

2. The method according to claim 1, wherein the collecting statistics about probabilities that each word and each string appear in the training corpus separately, to obtain an independent probability of each word and a joint probability of each string comprises:

    collecting statistics about the number of times that each word appears in the training corpus, the number of times that each string appears in the training corpus, and the total number of words in the training corpus separately;
    calculating the independent probability according to the number of times that each word appears in the training corpus and the total number of words in the training corpus; and
calculating the joint probability according to the number of times that each string appears in the training corpus and the total number of words in the training corpus.

3. The method according to claim 1, wherein the performing selection in the strings according to the independent probability and the joint probability, and using a selected string as a candidate neologism comprises:

    determining, for each string obtained through division, whether a joint probability of the string is greater than a product of independent probabilities of all words in the string; and determining the string as a candidate neologism if the joint probability of the string is greater than the product of the independent probabilities of all the words in the string.

4. The method according to claim 1, wherein each string obtained through division comprises at least two neighboring words.

5. The method according to any one of claims 1 to 3, wherein the joint probability corresponding to the candidate neologism is a joint probability of the selected string; and
after the performing selection in the strings according to the independent probability and the joint probability, and using a selected string as a candidate neologism, the method further comprises:

    updating the joint probability corresponding to the candidate neologism according to a particular rule.

6. The method according to claim 5, wherein the updating the joint probability corresponding to the candidate neologism according to a particular rule comprises:

    estimating a time required for reading from a training start position in the training corpus to a position of the candidate neologism, to obtain a forward time;
    estimating a time required for reading from the position of the candidate neologism to a training end position in the training corpus, to obtain a backward time; and
    updating the joint probability corresponding to the candidate neologism by using a preset exponential decay function according to the forward time and the backward time, to obtain an updated joint probability.

7. The method according to claim 6, wherein the particular rule is an Ebbinghaus' memory law, and the exponential decay function is constructed according to the Ebbinghaus' memory law.

8. The method according to claim 6, wherein the estimating a time required for reading from a training start position in the training corpus to a position of the candidate neologism, to obtain a forward time comprises:

calculating a distance between the training start position in the training corpus to the position of the candidate neologism, to obtain a first distance; and
dividing the first distance by a preset reading speed, to obtain the forward time.

9. The method according to claim 6, wherein the estimating a time required for reading from the position of the candidate neologism to a training end position in the training corpus, to obtain a backward time comprises:

calculating a distance between the position of the candidate neologism to the training end position in the training corpus, to obtain a second distance; and
dividing the second distance by a preset reading speed, to obtain the backward time.

10. A text information processing apparatus, comprising:

an obtaining unit, configured to determine training corpus according to text information;
a division unit, configured to divide the training corpus into words and strings;
a statistics collection unit, configured to collect statistics about probabilities that each word and each string appear in the training corpus separately, to obtain an independent probability of each word and a joint probability of each string;
a selection unit, configured to: perform selection in the strings according to the independent probability and the joint probability, and use a selected string as a candidate neologism; and
a determining unit, configured to determine the candidate neologism as a neologism when the candidate neologism is not in a preset dictionary and a joint probability corresponding to the candidate neologism is greater than a preset threshold.

11. The apparatus according to claim 10, wherein the statistics collection unit is further configured to:

collect statistics about the number of times that each word appears in the training corpus, the number of times that each string appears in the training corpus, and the total number of words in the training corpus separately;
calculate the independent probability according to the number of times that each word appears in the training corpus and the total number of words in the training corpus; and
calculate the joint probability according to the number of times that each string appears in the training corpus and the total number of words in the training corpus.

12. The apparatus according to claim 10, wherein the selection unit is further configured to:

determine, for each string obtained through division, whether a joint probability of the string is greater than a product of independent probabilities of all words in the string; and determine the string as a candidate neologism if the joint probability of the string is greater than the product of the independent probabilities of all the words in the string.

13. The apparatus according to claim 10, wherein each string obtained through division comprises at least two neighboring words.

14. The apparatus according to any one of claims 10 to 12, wherein the joint probability corresponding to the candidate neologism is a joint probability of the selected string;
the apparatus further comprises an update unit; and
the update unit is configured to update the joint probability corresponding to the candidate neologism according to a particular rule.

15. The apparatus according to claim 14, wherein the update unit is further configured to: estimate a time required for reading from a training start position in the training corpus to a position of the candidate neologism, to obtain a forward time; estimate a time required for reading from the position of the candidate neologism to a training end position in the training corpus, to obtain a backward time; and update the joint probability corresponding to the candidate neologism by using a preset exponential decay function according to the forward time and the backward time, to obtain an updated joint probability.

16. The apparatus according to claim 15, wherein the particular rule is an Ebbinghaus' memory law, and the exponential decay function is constructed according to the Ebbinghaus' memory law.

17. The apparatus according to claim 15, wherein the update unit is further configured to: calculate a distance between the training start position in the training corpus to the position of the candidate neologism, to obtain a first distance; and divide the first distance by a preset reading speed, to obtain the forward time.

18. The apparatus according to claim 15, wherein the update unit is further configured to: calculate a distance between the position of the candidate neologism to the training end position in the training corpus, to obtain a second distance; and divide the second distance by a preset reading speed, to obtain the backward time.

19. A text information processing apparatus, comprising:

> one or more processors; and
> a memory storing program instructions, the instructions, when being executed by the processor, causing the apparatus to perform the method according to any one of claims 1 to 9.

20. A computer readable storage medium comprising program instructions, the instructions, when being executed by a processor of a computing apparatus, causing the apparatus to perform the method according to any one of claims 1 to 9.

**FIG. 1a**

Determine training corpus according to text information — 101

↓

Divide the training corpus into words and strings — 102

↓

Collect statistics about probabilities that each word and each string appear in the training corpus separately, to obtain an independent probability of each word and a joint probability of each string — 103

↓

Perform selection in the strings according to the independent probability and the joint probability, and use a selected string as a candidate neologism — 104

↓

Determine the candidate neologism as a neologism when the candidate neologism is not in a preset dictionary and a joint probability corresponding to the candidate neologism is greater than a preset threshold — 105

**FIG. 1b**

| | |
|---|---|
| A server obtains text information, and determines training corpus according to the text information | ~ 201 |

↓

| | |
|---|---|
| The server divides the training corpus into words and strings | ~ 202 |

↓

| | |
|---|---|
| The server collects statistics about the number of times that each word appears in the training corpus, the number of times that each string appears in the training corpus, and the total number of words in the training corpus | ~ 203 |

↓

| | |
|---|---|
| The server calculates a probability of each word according to the number of times that each word appears in the training corpus and the total number of words in the training corpus, to obtain an independent probability of each word | ~ 204 |

↓

| | |
|---|---|
| The server calculates a probability of each string according to the number of times that each string appears in the training corpus and the total number of words in the training corpus, to obtain a joint probability of each string | ~ 205 |

↓

| | |
|---|---|
| The server compares the joint probability of each string with a product of independent probabilities of all words in the string, and determines the string as a candidate neologism if the joint probability is greater than the product | ~ 206 |

↓

| | |
|---|---|
| The server updates, in real time according to an Ebbinghaus' memory law, a joint probability corresponding to the candidate neologism in a candidate neologism set, to obtain an updated joint probability | ~ 207 |

↓

| | |
|---|---|
| The server determines the candidate neologism in the candidate neologism set as a neologism when the candidate neologism is not in a preset dictionary and the updated joint probability is greater than a preset threshold | ~ 208 |

**FIG. 2**

**FIG. 3a**

**FIG. 3b**

403 — Radio frequency circuit

404

Power supply    401

402

Memory    Processor

405    Input unit

Display unit    406

**FIG. 4**

# INTERNATIONAL SEARCH REPORT

International application No.

**PCT/CN2017/073020**

**A.    CLASSIFICATION OF SUBJECT MATTER**

G06F 17/27 (2006.01) i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: corpus, single word, word string, new word, text, character, process, string, probability, select, new, threshold

**C.    DOCUMENTS CONSIDERED TO BE RELEVANT**

| Category* | Citation of document, with indication, where appropriate, of the relevant passages | Relevant to claim No. |
|---|---|---|
| X | CN 102681981 A (FUJITSU LIMITED), 19 September 2012 (19.09.2012), description, paragraphs [0022]-[0044] | 1-20 |
| A | CN 104102658 A (TENCENT TECHNOLOGY (SHENZHEN) CO., LTD.), 15 October 2014 (15.10.2014), the whole document | 1-20 |
| A | CN 101079027 A (TENCENT TECHNOLOGY (SHENZHEN) CO., LTD.), 28 November 2007 (28.11.2007), the whole document | 1-20 |
| A | CN 102708147 A (BEIJING XINFA PATENT INFORMATION CO., LTD.), 03 October 2012 (03.10.2012), the whole document | 1-20 |

☐ Further documents are listed in the continuation of Box C.        ☒ See patent family annex.

| | |
|---|---|
| *        Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |
| Date of the actual completion of the international search | Date of mailing of the international search report |
| 12 April 2017 (12.04.2017) | **02 May 2017 (02.05.2017)** |
| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHAO, Tianqi** Telephone No.: (86-10) **61648112** |

Form PCT/ISA/210 (second sheet) (July 2009)

## INTERNATIONAL SEARCH REPORT
### Information on patent family members

| | International application No. |
| --- | --- |
| | **PCT/CN2017/073020** |

| Patent Documents referred in the Report | Publication Date | Patent Family | Publication Date |
| --- | --- | --- | --- |
| CN 102681981 A | 19 September 2012 | None | |
| CN 104102658 A | 15 October 2014 | None | |
| CN 101079027 A | 28 November 2007 | None | |
| CN 102708147 A | 03 October 2012 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610091229 X